# FASCICULE DE BREVET EUROPEEN

(11) **EP 1 493 202 B1**
(45) Date de publication et mention de la délivrance du brevet: **14.07.2010**
(21) Numéro de dépôt: 02803836.2
(22) Date de dépôt: 27.11.2002
(51) Int. Cl.: H01M 10/052

(54) **GENERATEUR ELECTROCHIMIQUE AU LITHIUM COMPRENANT AU MOINS UNE ELECTRODE BIPOLAIRE AVEC SUBSTRATS CONDUCTEURS EN ALUMINIUM OU ALLIAGE D'ALUMINIUM**
ELEKTROCHEMISCHER LITHIUMGENERATOR MIT MINDESTENS EINER BIPOLARELEKTRODE MIT LEITFÄHIGEN ALUMINIUM- ODER ALUMINIUMLEGIERUNGSSUBSTRATEN
LITHIUM ELECTROCHEMICAL GENERATOR COMPRISING AT LEAST A BIPOLAR ELECTRODE WITH CONDUCTIVE ALUMINIUM OR ALUMINIUM ALLOY SUBSTRATES

(30) Priorité: 28.11.2001 FR 0115377
(43) Date de publication de la demande: 05.01.2005
(73) Titulaire: Commissariat à l'Énergie Atomique et aux Énergies Alternatives, 75015 Paris (FR)
(72) Inventeur: LE CRAS, Frédéric, F-38470 Notre Dame de L'Osier (FR); MARTINET, Sébastien, 38000 Grenoble (FR)
(74) Mandataire: Poulin, Gérard
(86) Numéro de dépôt international: PCT/FR2002/004066
(87) Numéro de publication internationale: WO 2003/047021

(56) Documents cités:
- WO-A-96/12314
- US-A- 5 254 415
- MARSH R A ET AL: "Bipolar lithium-ion battery development" JOURNAL OF POWER SOURCES, ELSEVIER SEQUOIA S.A. LAUSANNE, CH, vol. 65, no. 1, 1 mars 1997 (1997-03-01), pages 133-141, XP004059641 ISSN: 0378-7753

## Description

La présente invention a trait à un générateur électrochimique au lithium, comportant au moins une électrode bipolaire.

Le domaine général de l'invention peut être défini comme celui des générateurs électrochimiques au lithium.

Ces générateurs électrochimiques fonctionnent sur le principe d'insertion ou de désinsertion (ou intercalation-désintercalation) de lithium sur au moins une électrode.

En effet, la réaction électrochimique à l'origine de la production de courant met en jeu le transfert de cations lithium, par l'intermédiaire d'un électrolyte conducteur d'ions lithium, lesdits cations provenant d'une électrode négative venant soit s'intercaler dans le réseau accepteur de l'électrode positive, soit réalimenter l'électrolyte en ions lithium.

Les générateurs électrochimiques au lithium ont rapidement fait l'objet de nombreux développements du fait de leurs bons résultats obtenus en matière de tension, de densités d'énergie massique et volumique, par rapport aux accumulateurs au plomb ou encore les accumulateurs du type Nickel-Cadmium (Ni-Cd) ou Nickel-Hydrure métallique (Ni-MH).

De part ces caractéristiques très attractives, ces générateurs électrochimiques trouvent leur application dans de nombreux domaines, notamment dans l'alimentation des systèmes embarqués de faible épaisseur, comme les cartes de crédit, les étiquettes intelligentes, dans l'alimentation des téléphones mobiles ou encore dans l'alimentation des véhicules électriques.

### ETAT DE LA TECHNIQUE.

Les premiers accumulateurs au lithium comportaient du métal lithium au niveau de leurs électrodes négatives, ce qui fournissait une tension élevée et d'excellentes densités d'énergie massique et volumique. Toutefois, les recherches ont révélé que les recharges répétées de ce type d'accumulateur s'accompagnaient inéluctablement de la formation de dendrites de lithium venant, le plus souvent, détériorer le séparateur incluant l'électrolyte.

Afin de contourner les problèmes d'instabilité, de sécurité et de durée de vie inhérents à la présence de lithium métal dans les accumulateurs au lithium, les recherches ont été réorientées vers un accumulateur au lithium non métallique où le lithium s'insère dans l'électrode négative.

Pour ce type d'accumulateurs, on distingue, selon la constitution de l'électrolyte, l'accumulateur lithium-ion à électrolyte liquide et l'accumulateur lithium-ion à électrolyte solide ou gélifié du type polymère.

Selon ces deux variantes, l'électrode négative est généralement à base de matériau carboné, tel que du graphite, du carbone graphitisable ou non et est supportée par un feuillard de cuivre, par exemple, de 15 à 18 µm d'épaisseur.

L'électrode positive est généralement à base d'oxyde de métal de transition lithié de type LiMO₂, où M désigne le Co, Ni, Mn et autres métaux de transition et est supportée généralement par un feuillard d'aluminium, typiquement, de l'ordre de 20 µm d'épaisseur. Elle peut être aussi une électrode à base de carbone activé à haute surface spécifique.

En processus de charge, les réactions électrochimiques sont :
- sur l'électrode négative :

   C + xLi⁺ + xe⁻ → LiₓC
- sur l'électrode positive :
   soit : LiMO₂ →Li₁₋ₓMO₂ + xLi⁺ + xe⁻
      les ions lithium circulant à travers un séparateur comportant l'électrolyte ;
   soit : X⁻ → X + e⁻ si l'électrolyte contient un sel de type Li⁺X⁻ et où X sera alors adsorbé sur le carbone, dans le cas d'une électrode positive en carbone activé.

En processus de décharge, ce sont les réactions inverses qui se produisent.

Concernant la technologie impliquant un électrolyte liquide, le séparateur est constitué, généralement d'un film microporeux en polyéthylène ou en polypropylène ou une association des deux, ledit film étant imprégné de l'électrolyte.

L'ensemble électrodes/séparateur est, quant à lui, imprégné par un électrolyte, constitué d'un solvant, généralement de la famille des carbonates, et d'un sel de lithium.

Dans la technologie impliquant un électrolyte solide, le séparateur est constitué, au moins en partie d'un électrolyte polymère gélifié ou sec.

Les accumulateurs au lithium, tels que précédemment décrits, sont donc constitués d'une électrode négative fonctionnant à très bas potentiel, par.exemple O.V pour les électrodes en lithium métal ou 100 mV pour les électrodes carbonées, ce qui peut engendrer, de ce fait, des risques de formation de dendrites de lithium notamment lors des charges rapides.

On note, que les potentiels sont donnés par rapport au couple de référence Li⁺/Li.

Ce phénomène contribue notamment à limiter les performances en puissance des accumulateurs au lithium ainsi que leur durée de vie et pose, par ailleurs, des problèmes de sécurité du fait des risques de courts-circuits internes. De plus, le fait d'utiliser des matériaux actifs négatifs à très bas potentiel contraint à utiliser un matériau collecteur de courant à base de cuivre, qui présente une densité importante de l'ordre, par exemple, de 8,96 g/cm³, ce qui contribue à limiter l'énergie massique de ce type d'accumulateurs. De plus, le cuivre est un matériau onéreux.

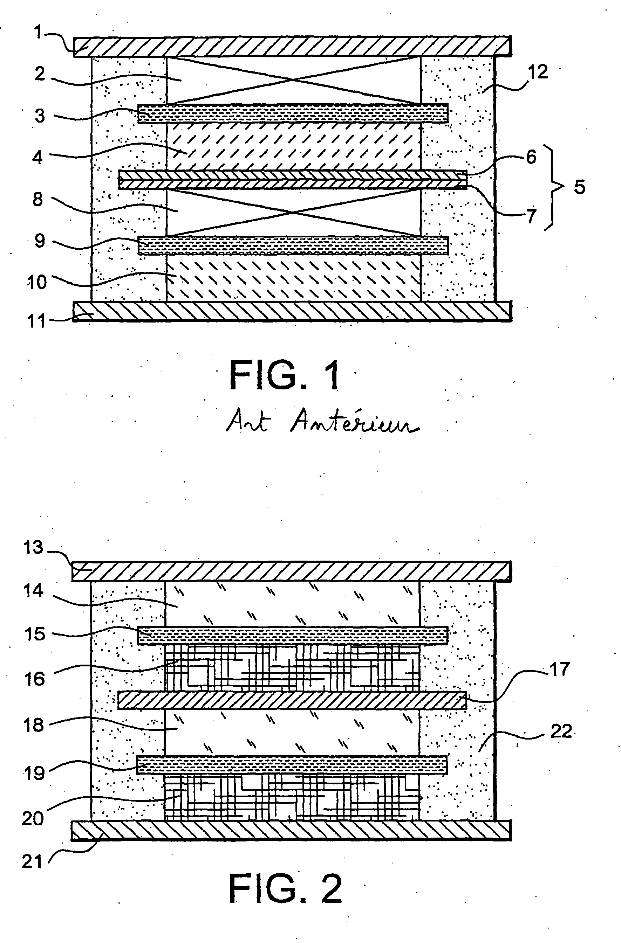

Afin de remédier aux faibles performances en puissance de ce type de réalisation, S.Hossain dans le brevet américain US 5,595,839 [1] propose une architecture de pile, représentée sur la figure 1, constituée d'un empilement de cellules électrochimiques, la jonction entre cellules adjacentes étant assurée par une structure bipolaire unitaire comprenant respectivement une électrode positive 8 et une électrode négative 4, lesdites électrodes étant disposées de part et d'autre de deux substrats accolés formant un ensemble 5, le substrat du côté électrode négative constituée d'un matériau carboné étant un substrat en cuivre 6 et le substrat du côté électrode positive, constituée de LiMO₂ étant un substrat en aluminium 7. Dans le cas d'un empilement de deux cellules, tel que représenté sur la figure 1, la borne positive de l'accumulateur est constituée d'une électrode 2 à base de LiMO₂ sur feuillard d'aluminium 1 et la borne négative est constituée d'une électrode 10 à base de carbone sur feuillard de cuivre 11 (M ayant la même signification que celle donnée précédemment). Les bornes positives et négatives sont isolées électriquement de la structure bipolaire unitaire par des séparateurs microporeux 3,9 imprégnés d'électrolyte liquide. L'isolation entre les cellules séparées par la structure bipolaire est assurée au moyen d'un joint 12 à base de polytétrafluoroéthylène (PTFE).

Bien que cette architecture permette d'améliorer les performances des générateurs électrochimiques en puissance par diminution de la résistance interne du générateur, elle n'apporte aucune amélioration en terme d'énergie massique, vu que le générateur électrochimique contient toujours du cuivre en tant que matériau collecteur de courant.

Par ailleurs, bien que les phénomènes de croissance dendritique et de dépôt de lithium soient atténués par l'utilisation d'une électrode bipolaire engendrant une diminution des résistances internes, et de ce fait un éloignement des potentiels de fonctionnement des électrodes négatives par rapport au potentiel de dépôt de lithium métallique, ces phénomènes restent toujours une limitation à la durée de vie et aux performances en puissance de l'accumulateur puisque l'électrode négative en carbone fonctionne toujours, malgré une légère amélioration, à un potentiel voisin du dépôt de lithium.

Il est également important de souligner que dans tous les modes de réalisation de l'art antérieur, les accumulateurs au lithium conçus pour les applications en puissance requièrent des systèmes de sécurité spécifiques tels que coupe-circuit, évent ou circuit électronique de protection afin de remplir les normes de sécurité. Ces systèmes de sécurité conduisent bien évidemment à une réduction des performances énergétiques massique et volumique de ces accumulateurs.

Les différents accumulateurs au lithium de l'art antérieur présentent donc tous une puissance et une durée de vie réduites, du fait de la formation de dendrites de lithium, lors notamment de la charge de ces accumulateurs. De plus, ils présentent tous une énergie massique limitée, du fait de l'utilisation d'un matériau collecteur de courant en cuivre du côté de l'électrode négative. Enfin, les accumulateurs de l'art antérieur ne sont pas intrinsèquement sûrs et nécessitent l'apport de systèmes de sécurité externes.

### EXPOSE DE L'INVENTION.

Le but de la présente invention est de proposer un générateur au lithium qui résolve les inconvénients de l'art antérieur, notamment les faibles performances en puissance, l'insuffisance d'énergie massique, la durée de vie limitée et l'absence de sécurité intrinsèque desdits générateurs de l'art antérieur.

Pour ce faire, l'invention a pour objet un générateur électrochimique au lithium comprenant :
- une électrode périphérique positive comprenant un substrat conducteur électrique auquel adhère une couche active positive incluant un matériau actif positif ;
- une électrode périphérique négative comprenant un substrat conducteur électrique auquel adhère une couche active négative incluant un matériau actif négatif ;
- au moins une électrode bipolaire comprenant une couche active positive incluant un matériau actif positif adhérant à un premier substrat conducteur électrique et comprenant une couche active négative incluant un matériau actif négatif adhérant à un deuxième substrat conducteur électrique, lesdits premier et deuxième substrats étant accolés ;
- deux séparateurs conducteurs d'ions lithium et isolant électrique encadrant chaque électrode bipolaire,
ledit générateur étant **caractérisé en ce que** lesdits premier et deuxième substrats conducteurs électriques de la, au moins une, électrode bipolaire sont constitués de matériaux identiques ou différents choisis dans le groupe constitué par l'aluminium et ses alliages et en ce que le matériau actif négatif de la couche active négative de la, au moins une, électrode bipolaire est un matériau non susceptible de former.un alliage aluminium-lithium avec le matériau dudit deuxième substrat conducteur électrique.

Selon l'invention, il est entendu que lesdits premier et second substrats sont non susceptibles de former un alliage avec le matériau actif avec lequel ils sont en contact.

Selon l'invention, on note également qu'une électrode est un ensemble comprenant au moins un substrat conducteur électrique et une couche active comportant le matériau actif déposée sur une face dudit substrat, ledit matériau étant adapté à la polarité de l'électrode qui permet la réaction électrochimique.

De préférence, le premier substrat conducteur électriques et le deuxième substrat de la, au moins une, électrode bipolaire forment un seul substrat, c'est-à-dire un substrat monobloc. Selon ce mode de réalisation particulier, lesdits substrats se présentent ainsi sous forme d'une pièce en un bloc et non sous forme d'un ensemble de deux pièces accolées l'une avec l'autre.

Quelque que soit la configuration desdits premier et deuxième substrats, l'électrode bipolaire comporte ainsi une couche active positive et une couche active négative disposées respectivement sur les faces opposées d'un substrat commun (ce substrat commun correspondant à l'ensemble résultant de l'accolement desdits premier et deuxième substrats ou au substrat monobloc susmentionné).

La présente invention présente donc l'avantage de proposer un générateur électrochimique au lithium, qui présente, du fait de l'utilisation exclusive d'aluminium ou alliage d'aluminium pour la constitution des substrats conducteurs électriques (c'est-à-dire du premier substrat et deuxième, substrat selon l'invention) de chaque électrode bipolaire, une densité d'énergie massique bien supérieure aux systèmes de l'art antérieur, du fait notamment de la faible densité de l'aluminium (2,699 g/cm³).

Pour obtenir ce résultat, l'on choisit avantageusement un matériau actif négatif pour chaque électrode bipolaire compatible avec ledit deuxième substrat auquel il adhère, c'est-à-dire un matériau dont le potentiel d'intercalation du lithium dans ledit matériau est supérieur au potentiel de formation de l'alliage aluminium-lithium.

Avantageusement, le potentiel d'intercalation du lithium dans le matériau actif négatif de la, au moins une, électrode bipolaire est supérieur à 0,25 V.

On note que, selon l'invention, les potentiels sont donnés en référence au potentiel du couple Li⁺/Li.

Généralement, les électrodes périphériques peuvent être quelconques, puisqu'elles ont une fonction particulière de collecteurs de courant. Elles peuvent donc être réalisées, comme cela est décrit dans l'art antérieur, puisqu'elles n'ont pas à.assurer la fonction de bipolarité.

Mais il peut être intéressant, pour gagner encore en poids de réaliser les substrats conducteurs électriques des électrodes périphériques en aluminium ou alliage d'aluminium associés avec des matériaux actifs de constitutions identiques à celles utilisés pour l'électrode bipolaire.

Aussi, le générateur électrochimique, selon l'invention, peut..se caractériser, également, par le fait que le substrat conducteur électrique de l'une au moins des électrodes périphériques est constitué d'un matériau choisi dans le groupe constitué l'aluminium et les alliages d'aluminium.

Le matériau actif négatif de chaque électrode bipolaire est de préférence Li₄Ti₅O₁₂.

L'utilisation d'un tel matériau actif négatif présentant un potentiel de 1.55 V, qui est supérieur au potentiel de formation de l'alliage aluminium-lithium de l'ordre de 0,25 V, permet d'éviter d'une part la formation dudit alliage et d'autre part la formation de dendrites de lithium lors des charges à régime élevé.

Par conséquent, les générateurs électrochimiques, selon l'invention, utilisant notamment un tel matériau, présentent une durée de vie améliorée par rapport aux systèmes lithium-ion classiques. De plus, en l'absence de risque de formation de dendrites, il est possible d'utiliser un séparateur plus fin et moins onéreux que les séparateurs utilisés classiquement.

Par ailleurs, l'utilisation d'un matériau actif négatif moins réducteur que le lithium métal de l'art antérieur conduit à améliorer la sécurité intrinsèque de par la réactivité moindre dudit matériau.

Le matériau actif négatif peut être également choisi dans un groupe constitué par le carbone pyrolitique, le coke, un alliage métallique contenant du lithium, un chalcogénure ou un halogénure de métal, à la condition que ces matériaux remplissent les exigences de l'invention.

De préférence, le matériau actif positif de chaque électrode bipolaire, selon l'invention est choisi dans un groupe de transition constitué par les phosphates et les orthosilicates de métaux de transition, le carbone, les oxydes de métaux de transition substitués ou non et les mélanges de ceux-ci.

On précise que selon l'invention, on entend par « métal de transition » un métal ayant une sous-couche d incomplètement remplie à l'état d'atome neutre ou dans l'un de leurs états d'oxydation usuel. Ces éléments se substituent en trois séries de transition :
- la première série de transition allant du scandium au zinc ;
- la deuxième série de transition allant de l'yttrium au cadmium ;
- la troisième série de transition allant du hafnium au mercure.

Par extension, on peut ranger dans les métaux de transition les éléments possédant une sous-couche f incomplète (dits éléments de transition profonde), ces métaux correspondant à la famille des lanthanides et des actinides.

A titre d'exemple de phosphates utilisables, on peut citer les phosphates de fer, tels que LiFeₓ₁Mn₁₋ₓ₁PO₄ avec 0≤x₁≤1, les phosphates de cobalt tels que LiCoPO₄ et les mélanges de ceux-ci.- Ces matériaux présentent une structure de type olivine.

A titre d'exemple d'oxydes de métaux de transition, on peut citer LiMₓ₂M'ₓ₃Mn₂₋ₓ₂₋ₓ₃O₄ avec 0≤x₂≤0,33, 0≤x₃≤0,5, M désignant Li ou Mg et M' désignant un métal de transition choisi dans le groupe constitué par Ni, Co, Fe, Cr, LiCoₓ₄Ni₁₋ₓ₄O avec 0≤x₄≤1, LiAlₓ₅Ni₁₋ₓ₅O₂ avec 0≤x₅≤0,25 et des mélanges de ceux-ci. Les matériaux de formule LiMₓ₂M'ₓ₃Mn₂₋ₓ₂₋ₓ₃O₄ présentent une structure de type spinelle.

De préférence, selon l'invention, le matériau actif positif est en un oxyde de métal de transition de formule Li_{1+ε}Mn_{2-ε}O₄ avec 0≤ε≤0,33.

Ainsi, lorsque ce matériau est couplé à un matériau actif négatif tel que Li₄Ti₅O₁₂, le générateur électrochimique, selon l'invention, permet de délivrer entre deux électrodes de signes opposés une tension de l'ordre de 2,5 V, ce qui permet notamment d'utiliser des électrolytes moins coûteux présentant une fenêtre de stabilité réduite à 2,5 V, au lieu de 4V pour les batteries lithium-ion classiques.

Selon l'invention, le matériau actif positif de chaque électrode bipolaire peut être un matériau actif par adsorption, de préférence, un carbone activé.

Les séparateurs, qui assurent la conduction ionique entre deux électrodes de signes opposés d'un générateur selon l'invention, et étant disposés notamment de part et d'autre de chaque électrode bipolaire peuvent être de divers types.

Selon une première variante, les séparateurs peuvent être constitués d'un élément poreux contenant un électrolyte liquide conducteur d'ions lithium.

L'électrolyte liquide comporte par exemple un solvant ou mélange de solvants du type carbonate, tels que le carbonate d'éthylène, le carbonate de propylène, le diméthyl carbonate ou le diéthyl carbonate, un solvant ou mélange de solvants du type éther, tel que le diméthoxyéthane, le dioxolane, le dioxane, dans lequel est dissous un sel de lithium.

A titre d'exemples, le sel de lithium peut être choisi dans le groupe constitué par LiPF₆, LiClO₄, LiBF₄, LiAsF₆, LiCF₃SO₃, LiN(CF₃SO₂)₃, LiN(C₂F₅SO₂).

Selon une seconde variante, les séparateurs peuvent être un électrolyte polymérique comprenant un sel de lithium.

A titre d'exemple, le polymère peut comprendre du poly(acrylonitrile), du poly(oxyde d'éthylène), du poly(fluorure de vinylidène), un copolymère de fluorure de vinylidène-hexafluoropropylène ou un autre polymère rendu conducteur ionique par gélification en présence d'un électrolyte liquide. Le sel de lithium peut répondre à la même définition que celle donnée précédemment.

Selon une troisième variante, les séparateurs peuvent être constitués d'un matériau inorganique conducteur d'ions lithium choisi dans le groupe constitué par les phosphates et les borates de lithium.

De préférence, le matériau inorganique conducteur d'ions lithium est Li₃PO_{2,5}N_{0,3}.

Selon une quatrième variante, les séparateurs comprennent un sel fondu de lithium.

Selon une cinquième variante, les séparateurs peuvent être constitués d'un liquide ionique comprenant un sel de lithium dissous, tel que les sels déjà cités précédemment. De plus, le liquide ionique peut être choisi, de préférence, dans le groupe constitué par les sels d'imidazolium, les sels de dialkylimidazolium, les sels d'alkylpyridinium, les sels de dialkylpyridinium, les sels de chloroaluminate, les sels d'alkylchloroaluminate.

Enfin, selon un mode particulièrement avantageux de l'invention, le générateur électrochimique se caractérise par le fait que tous les substrats conducteurs électriques (à savoir les substrats des électrodes périphériques et le premier et deuxième substrat de chaque électrode bipolaire) sont en aluminium et en ce que tous les matériaux actifs négatifs dudit générateur sont constitués du même matériau et tous les matériaux actifs positifs dudit générateur sont constitués du même matériau. Ainsi, on peut accéder à un générateur, dont les substrats conducteurs des électrodes bipolaires et des électrodes périphériques sont tous en aluminium avec des matériaux actifs négatifs compatibles avec ledit aluminium, ce qui permet d'améliorer de manière non négligeable les performances du générateur par rapport à des générateurs comportant des substrats en cuivre.

Selon l'invention, le générateur au lithium peut comprendre également un joint disposé entre les électrodes.

Ce joint peut être, par exemple, à base de polyoléfines, telles que le polyéthylène, le polypropylène ou à base de polytétrafluoroéthylène.

D'autres caractéristiques et avantages de l'invention apparaîtront mieux à la lecture de l'exemple qui suit, donné bien entendu à titre illustratif et non limitatif, en référence au dessin annexé.

### BREVE DESCRIPTION DES DESSINS.

La figure 1 représente une architecture de batterie au lithium selon le brevet américain US 5,595,839.
La figure 2 représente une architecture de générateur électrochimique au lithium selon un mode particulier de réalisation de l'invention.
La figure 3A représente la variation de tension U (en V) aux bornes d'un générateur électrochimique réalisé selon l'exemple explicité ci-dessous, en fonction de la capacité du générateur électrochimique notée C_{Acc} (en mAh) ou de la capacité spécifique de Li_{1.04}Mn_{1.96}O₄ notée C_{Li_{1.04} Mn_{1.96}O₄} (en mAh/g) au cours de cycles de charge/décharge à courant constant de ±0,31 mA réalisés à régime C/4, le régime C/4 correspondant à une charge ou une décharge complète en 4 heures.
La figure 3B représente l'évolution de la capacité spécifique de Li_{1.04}Mn_{1.96}O₄, notée C_{Li_{1.04} Mn_{1.96}O₄} (en mAh/g) en fonction du nombre de cycles charge/décharge n_{c/d} à régime C/4.
La figure 4A représente la variation de tension U (en V) aux bornes d'un générateur électrochimique réalisé selon l'exemple explicité ci-dessous, en fonction de la capacité du générateur électrochimique notée C_{Acc} (en mAh) ou de la capacité spécifique de Li_{1.04}Mn_{1.96}O₄ notée C_{Li_{1.04} Mn_{1.96}O₄} (en mAh/g) au cours de cycles de charge/décharge réalisés à des régimes différents (C/4, C, 2C, 4C, 8C), le courant appliqué pour lesdits régimes étant respectivement de 0,31 mA, 1,24 mA, 2,48 mA, 4,96 mA, 9,92 mA.
La figure 4B représente l'évolution de la capacité spécifique de Li_{1.04}Mn_{1.96}O₄ notée C_{Li_{1.04} Mn_{1.96}O₄} (en mAh/g) en fonction du nombre de cycles charge/décharge n_{c/d}, à courant constant à différents régimes (C/4, C, 2C, 4C, 8C).

### DESCRIPTION DETAILLEE D'UN MODE DE REALISATION DE L'INVENTION.

### EXEMPLE

### 1)Réalisation de l'électrode positive.

Une électrode positive de composition en masse suivante :
- 85,5 % Li_{1.04}Mn_{1.96}O₄ de chez ERACHEM Europe ;
- 8,5 % de noir de carbone super P de chez ERACHEM Europe ;
- 6,0 % de polyfluorure de vinylidène (PVDF) Solef 6020 de chez SOLVAY ;
est réalisée selon le protocole suivant :
- pesée des poudres oxyde de manganèse, noir de carbone séparément ;
- préparation d'une solution de N-méthyl-pyrolidonne (NMP) à 12 % en masse de PVDF ;
- introduction dans un mélangeur du PVDF dissous dans la NMP, puis ajout de NMP pour diluer ;
- ajout progressif des poudres tout en poursuivant le mélange ;
- après obtention d'un mélange homogène, enduction avec ce mélange, d'un feuillard en aluminium de 20 micromètres, à l'aide d'une racle micrométrique ;
- séchage de l'électrode ainsi obtenue dans une étuve à 80 °C, initialement 1 heure sous pression atmosphérique puis 2 heures sous vide.

### 2) Réalisation de l'électrode négative.

Une électrode négative de composition en masse suivante:
- 85,7 % de Li₄Ti₅O₁₂ obtenu par chauffage à 900 °C pendant 15 heures sous air d'un mélange de poudres en proportions 5TiO₂, 2LiCO₃ ;
- 8,3 % de noir de carbone super P de chez ERACHEM Europe ;
- 6,0 % de PVDF Solef 6020 de chez SOLVAY ;
est réalisée selon le protocole suivant :
- pesée des poudres oxyde de titane, noir de carbone séparément ;
- préparation d'une solution de NMP (N-méthyl-pyrolidonne) à 12 % en masse de PVDF ;
- introduction dans un mélangeur du PVDF dissous dans la NMP, puis ajout de NMP pour diluer ;
- ajout progressif des poudres tout en poursuivant le mélange ;
- après obtention d'un mélange homogène, enduction sur un feuillard aluminium de 20 µm d'épaisseur, à l'aide d'une racle micrométrique ;
- séchage de l'électrode dans une étuve à 80 °C, initialement 1 heure sous pression atmosphérique puis 2 heures sous vide.

### 3) Réalisation de l'électrode bipolaire.

L'électrode bipolaire est réalisée en appliquant le protocole de réalisation de l'électrode négative sur l'autre face d'une électrode positive réalisée selon le paragraphe 1.

### 4) Réalisation du générateur électrochimique bipolaire.

Après découpe au format choisi, les électrodes sont comprimées séparément à 2 t/cm² à température ambiante.

L'empilement représenté sur la figure 2 est réalisé en deux étapes. Une première étape en atmosphère non contrôlée consiste, au moyen de deux joints polyéthylène en «U», à réaliser l'étanchéité du générateur électrochimique parallélépipédique sur trois côtés par compression à chaud. La seconde étape, réalisée en atmosphère anhydre consiste à activer le générateur électrochimique par ajout d'électrolyte sur le quatrième côté puis à refermer l'accumulateur sur ce dernier côté au moyen de deux autres joints polyéthylène.

A l'issue de ce procédé de fabrication, on obtient, conformément à la figure 2 un générateur électrochimique comportant une électrode positive périphérique comprenant un substrat conducteur en aluminium 13 et une couche active positive 14 à base de Li_{1,04}Mn_{1,96}O₄ et une électrode négative périphérique comprenant un substrat conducteur en aluminium 21 et une couche active négative 20 à base de Li₄Ti₅O₁₂ encadrant une électrode bipolaire comprenant une couche active positive 18 et une couche active négative 16 de part et d'autre d'un substrat commun conducteur en aluminium 17 (correspondant auxdits premier et deuxième substrats dans le cas où ceux-ci ne forment qu'une seule pièce). Selon ce mode de réalisation, le substrat 17 forme une seule pièce et ne résulte pas de deux substrats accolés.

Les électrodes périphériques sont séparées de l'électrode bipolaire par deux séparateurs 15,19. L'étanchéité de l'ensemble est assurée par un joint 22 pouvant être constitué de plusieurs éléments.

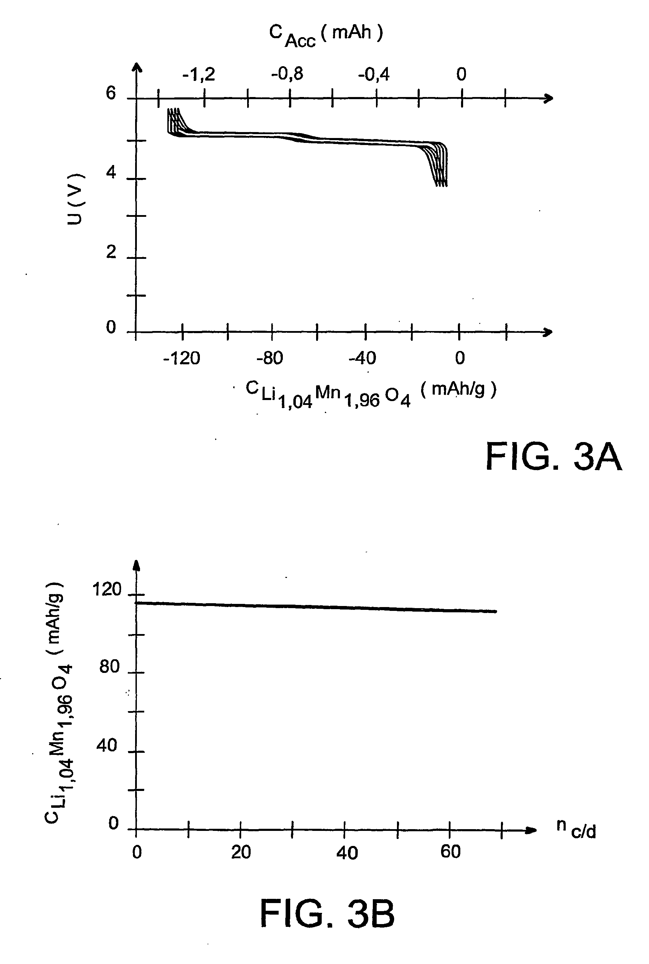

Des tests visant à mettre en évidence, notamment la stabilité de l'accumulateur obtenu, selon l'invention ont été effectués. Les résultats sont regroupés sur les figures 3A et suivantes.

Ainsi, on peut constater sur la figure 3A, que les courbes de charge-décharge se superposent, ce qui dénote une stabilité de l'accumulateur au cours des différents cycles. Cette constatation est confirmée par la figure 3B, qui montre que la capacité spécifique de Li_{1,04}Mn_{1,96}O₄ évolue très faiblement lorsque le nombre de cycles augmente.

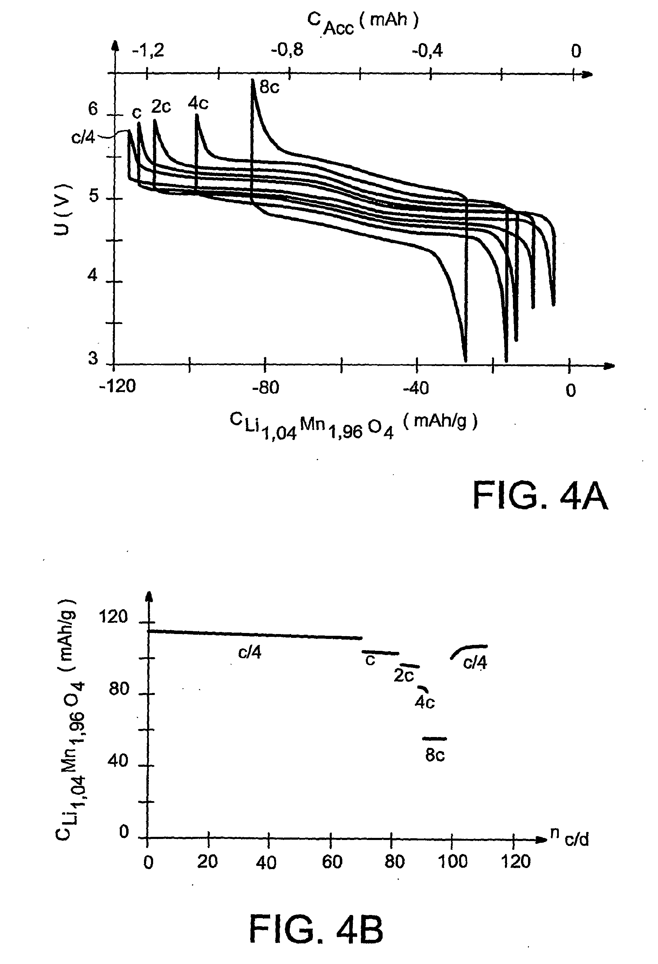

Sur les figures 4A et 4B, on constate que l'on récupère plus de 70 % de la capacité nominale du générateur électrochimique en régime 4C et environ 50% en régime 8C.

## Revendications

1. Générateur électrochimique au lithium comprenant :
- une électrode périphérique positive comprenant un substrat conducteur électrique (13) auquel adhère une couche active positive (14) incluant un matériau actif positif ;
- une électrode périphérique négative comprenant un substrat conducteur électrique (20) auquel adhère une couche active négative (21) incluant un matériau actif négatif ;
- au moins une électrode bipolaire comprenant une couche active positive (18) incluant un matériau actif positif adhérant à un premier substrat conducteur électrique, et comprenant une couche active négative (16) incluant un matériau actif négatif adhérant à un deuxième substrat conducteur électrique, lesdits premier et deuxième substrats étant accolés ou formant un seul substrat (17) ;
- deux séparateurs (15, 19) conducteurs d'ions lithium et isolant électrique encadrant chaque électrode bipolaire,
ledit générateur étant **caractérisé en ce que** lesdits premier et deuxième substrats conducteurs électriques de la, au moins une, électrode bipolaire sont constitués de matériaux identiques ou différents choisis parmi l'aluminium et ses alliages et **en ce que** le matériau actif négatif de la couche active négative (16) de la, au moins une, électrode bipolaire est un matériau non susceptible de former un alliage aluminium-lithium avec le matériau dudit deuxième substrat conducteur électrique.

2. Générateur électrochimique au lithium selon la revendication 1, **caractérisé en ce que** le matériau actif négatif de la, au moins une, électrode bipolaire présente un potentiel d'intercalation du lithium dans ledit matériau supérieur au potentiel de formation de l'alliage aluminium-lithium.

3. Générateur électrochimique au lithium, selon la revendication 2, **caractérisé en ce que** le potentiel d'intercalation du lithium dans le matériau actif négatif de la, au moins une, électrode bipolaire est supérieur à 0,25 V.

4. Générateur électrochimique au lithium, selon l'une quelconque des revendications 1 à 3, **caractérisé en ce que** le substrat conducteur électrique de l'une au moins des électrodes périphériques est constitué d'un matériau choisi dans le groupe constitué par l'aluminium et les alliages d'aluminium.

5. Générateur électrochimique au lithium selon l'une quelconque des revendications 1 à 4, **caractérisé en ce que** le matériau actif négatif de la, au moins une, électrode bipolaire est Li₄Ti₅O₁₂.

6. Générateur électrochimique au lithium, selon l'une quelconque des revendications 1 à 5, **caractérisé en ce que** le matériau actif positif de la, au moins une, électrode bipolaire est choisi dans un groupe constitué par les phosphates et les orthosilicates de métaux de transition, le carbone, les oxydes de métaux de transition substitués ou non et les mélanges de ceux-ci.

7. Générateur électrochimique au lithium, selon la revendication 6, **caractérisé en ce que** le phosphate de métal de transition est choisi dans le groupe constitué par LiFeₓ₁Mn₁₋ₓ₁PO₄ avec 0≤x₁≤1 et de LiCoPO₄ et les mélanges de ceux-ci.

8. Générateur électrochimique au lithium, selon la revendication 6, **caractérisé en ce que** l'oxyde de métal de transition est choisi dans le groupe constitué par LiMₓ₂M'ₓ₃Mn₂₋ₓ₂₋ₓ₃O₄ avec 0≤x₂≤0,33, 0≤x₃≤0,5, M désignant Li ou Mg et M' désignant un métal de transition choisi dans le groupe constitué par Ni, Co, Fe, Cr, de LiCoₓ₄Ni₁₋ₓ₄O₂ avec 0≤x₄≤1, de LiAlₓ₅Ni₁₋ₓ₅O₂ avec 0≤x₅≤0,25 et des mélanges de ceux-ci.

9. Générateur électrochimique au lithium, selon la revendication 6, **caractérisé en ce que** l'oxyde de métal de transition est Li_{1+ε}Mn_{2-ε}O₄ avec 0≤ε≤0,33.

10. Générateur électrochimique au lithium, selon l'une quelconque des revendications 1 à 5, **caractérisé en ce que** le matériau actif positif de la, au moins une, électrode bipolaire est un matériau actif par adsorption.

11. Générateur électrochimique au lithium selon la revendication 10, **caractérisé en ce que** le matériau actif positif est un carbone activé.

12. Générateur électrochimique au lithium, selon l'une quelconque des revendications 1 à 11, **caractérisé en que** les séparateurs (15, 19) sont constitués d'un élément poreux contenant un électrolyte liquide conducteur d'ions lithium.

13. Générateur électrochimique au lithium, selon l'une quelconque des revendications 1 à 11, **caractérisé en ce que** les séparateurs (15, 19) sont constitués d'un électrolyte polymérique comprenant un sel de lithium.

14. Générateur électrochimique au lithium, selon l'une quelconque des revendications 1 à 11, **caractérisé en ce que** les séparateurs (15, 19) sont constitués d'un matériau inorganique conducteur d'ions lithium choisi dans le groupe constitué par les phosphates et les borates de lithium.

15. Générateur électrochimique selon la revendication 14, **caractérisé en ce que** le matériau inorganique conducteur d'ions lithium est Li₃PO_{2,5}N_{0,3}.

16. Générateur électrochimique selon l'une quelconque des revendications 1 à 11, **caractérisé en ce que** les séparateurs (15, 19) comprennent un sel fondu de lithium.

17. Générateur électrochimique selon l'une quelconque des revendications 1 à 11, **caractérisé en ce que** les séparateurs (15, 19) sont constitués d'un liquide ionique comprenant un sel de lithium dissous.

18. Générateur électrochimique au lithium selon la revendication 17, **caractérisé en ce que** le liquide ionique est choisi dans le groupe constitué par les sels d'imidazolium, les sels de dialkylimidazolium, les sels d'alkylpyridinium, les sels de dialkylpyridinium, les sels de chloroaluminate, les sels d'alkylchloroaluminate.

19. Générateur électrochimique selon l'une quelconque des revendications précédentes, **caractérisé en ce que** tous les substrats conducteurs électriques (13, 17, 21) sont en aluminium et **en ce que** tous les matériaux actifs négatifs dudit générateur sont constitués du même matériau et tous les matériaux actifs positifs dudit générateur sont constitués du même matériau.

## Claims

1. Lithium electrochemical generator comprising:
- a positive peripheral electrode comprising an electrically conductive substrate (13) to which a positive active layer (14), including a positive active material, adheres;
- a negative peripheral electrode comprising an electrically conductive substrate (20) to which a negative active layer (21), including a negative active material, adheres;
- at least one bipolar electrode comprising a positive active layer (18), including a positive active material, which adheres to a first electrically conductive substrate and comprising a negative active layer (16), including a negative active material, which adheres to a second electrically conductive substrate, the said first and second substrates being fixed together or forming a single substrate (17);
- two separators (15, 19) that are lithium ion conductors but electronic insulators, which flank each bipolar electrode;
the said generator being **characterized in that** the said first and second electrically conductive substrates of the at least one bipolar electrode are made of identical or different materials chosen from the group formed by aluminium and its alloys and **in that** the negative active material of the negative active layer (16) of the at least one bipolar electrode is a material not capable of forming an aluminium-lithium alloy with the material of the said second electrically conductive substrate.

2. Lithium electrochemical generator according to Claim 1, **characterized in that** the negative active material of the at least one bipolar electrode has a potential for the intercalation of lithium into the said material above the potential for the formation of an aluminium-lithium alloy.

3. Lithium electrochemical generator according to Claim 2, **characterized in that** the potential for intercalation of lithium into the negative active material of the at least one bipolar electrode is greater than 0.25 V.

4. Lithium electrochemical generator according to any one of Claims 1 to 3, **characterized in that** the electrically conductive substrate of at least one of the peripheral electrodes is made of a material chosen from a group consisting of aluminium and aluminium alloys.

5. Lithium electrochemical generator according to any one of Claims 1 to 4, **characterized in that** the negative active material of the at least one bipolar electrode is Li₄Ti₅O₁₂.

6. Lithium electrochemical generator according to any one of Claims 1 to 5, **characterized in that** the positive active material of the at least one bipolar electrode is chosen from a group consisting of transition metal phosphates or orthosilicates, carbon, transition metal oxides, whether substituted or not, and mixtures thereof.

7. Lithium electrochemical generator according to Claim 6, **characterized in that** the transition metal phosphate is chosen from the group formed by LiFeₓ₁Mn₁₋ₓ₁PO₄ where 0 ≤ x₁ ≤ 1 and LiCoPO₄ and mixtures thereof.

8. Lithium electrochemical generator according to Claim 6, **characterized in that** the transition metal oxide is chosen from the group formed by LiMₓ₂M'ₓ₃Mn₂₋ₓ₂₋ₓ₃O₄ where 0 ≤ x₂ ≤ 0.33 and 0 ≤ x₃ ≤ 0.5, M denoting Li or Mg or M' denoting a transition metal chosen from the group consisting of Ni, Co, Fe and Cr, LiCoₓ₄Ni₁₋ₓ₄O₂ where 0 ≤ x₄ ≤ 1, LiAlₓ₅Ni₁₋ₓ₅O₂ where 0 ≤ x₅ ≤ 0.25, and mixtures thereof.

9. Lithium electrochemical generator according to Claim 6, **characterized in that** the transition metal oxide is Li_{1+ε}Mn_{2-ε}O₄ where 0 ≤ ε ≤ 0.33.

10. Lithium electrochemical generator according to any one of Claims 1 to 5, **characterized in that** the positive active material of the at least one bipolar electrode is an adsorptively active material.

11. Lithium electrochemical generator according to Claim 10, **characterized in that** the positive active material is an active carbon.

12. Lithium electrochemical generator according to any one of Claims 1 to 11, **characterized in that** the separators (15, 19) are formed from a porous element containing a liquid lithium-ion conductive electrolyte.

13. Lithium electrochemical generator according to any one of Claims 1 to 11, **characterized in that** the separators (15, 19) are formed from a polymeric electrolyte containing a lithium salt.

14. Lithium electrochemical generator according to any one of Claims 1 to 11, **characterized in that** the separators (15, 19) are formed from an inorganic lithium-ion conductive material chosen from the group formed by lithium phosphates and borates.

15. Electrochemical generator according to Claim 14, **characterized in that** the inorganic lithium-iron conductive material is Li₃PO_{2,5}N_{0,3}.

16. Electrochemical generator according to any one of Claims 1 to 11, **characterized in that** the separators (15, 19) comprise a molten lithium salt.

17. Electrochemical generator according to any one of Claims 1 to 11, **characterized in that** the separators (15, 19) are formed by an ionic liquid containing a dissolved lithium salt.

18. Lithium electrochemical generator according to Claim 17, **characterized in that** the ionic liquid is chosen from the group formed by imidazolium salts, dialkylimidazolium salts, alkylpyridinium salts, dialkylpyridinium salts, chloroaluminate salts and alkylchloroaluminate salts.

19. Electrochemical generator according to any one of the preceding claims, **characterized in that** all the electrically conductive substrates (13, 17, 21) are made of aluminium and **in that** all the negative active materials of the said generator are formed from the same material, and all the positive active materials of the said generator are formed from the same material.

## Patentansprüche

1. Elektrochemischer Lithiumgenerator, umfassend:
- eine positive periphere Elektrode mit einem elektrisch leitfähigen Substrat (13) , an dem eine ein positives aktives Material enthaltende positive aktive Schicht (14) haftet;
- eine negative periphere Elektrode mit einem elektrisch leitfähigen Substrat (20) , an dem eine ein negatives aktives Material enthaltende negative aktive Schicht (21) haftet;
- wenigstens eine bipolare Elektrode mit einer ein positives aktives Material enthaltenden positiven aktiven Schicht (18), die an einem ersten elektrisch leitfähigen Substrat haftet, und eine ein negatives aktives Material enthaltende negative aktive Schicht (16), wobei das erste und das zweite Substrat zusammengefügt sind oder ein einziges Substrat bilden (17);
- zwei jede bipolare Elektrode flankierende, Lithiumionen leitende und elektrisch isolierende Separatoren (15, 19), wobei der genannte Generator **dadurch gekennzeichnet ist, dass** die genannten elektrisch leitfähigen ersten und zweiten Substrate der wenigstens einen bipolaren Elektrode aus identischen oder unterschiedlichen Materialien sind, ausgewählt unter Aluminium und seinen Legierungen, und **dadurch**, dass das negative aktive Material der negativen aktiven Schicht (16) der wenigstens einen bipolaren Elektrode kein Material ist, das eine Aluminium-Lithium-Legierung mit dem Material des genannten zweiten elektrisch leitfähigen Substrats bilden kann.

2. Elektrochemischer Lithiumgenerator nach Anspruch 1, **dadurch gekennzeichnet, dass** das negative aktive Material der wenigstens einen bipolaren Elektrode ein Interkalationspotential des Lithiums in das genannte Material aufweist, das höher ist als das Aluminium-Lithium-Legierungsbildungspotential.

3. Elektrochemischer Lithiumgenerator nach Anspruch 2, **dadurch gekennzeichnet, dass** das Interkalationspotential des Lithiums in das aktive negative Material der wenigstens einen bipolaren Elektrode höher als 0,25 V ist.

4. Elektrochemischer Lithiumgenerator nach einem der Ansprüche 1 bis 3, **dadurch gekennzeichnet, dass** das elektrisch leitfähige Substrat von wenigstens einer der peripheren Elektroden durch ein Material gebildet wird, das ausgewählt ist aus der durch das Aluminium und die Aluminiumlegierungen gebildeten Gruppe.

5. Elektrochemischer Lithiumgenerator nach einem der Ansprüche 1 bis 4, **dadurch gekennzeichnet, dass** das negative aktive Material der wenigstens einen bipolaren Elektrode Li₄Ti₅O₁₂ ist.

6. Elektrochemischer Lithiumgenerator nach einem der Ansprüche 1 bis 5, **dadurch gekennzeichnet, dass** das positive aktive Material der wenigstens einen bipolaren Elektrode ausgewählt ist aus der Gruppe, die gebildet wird durch die Phosphate und die Orthosilikate von Übergangsmetallen, den Kohlenstoff, die Übergangsmetalloxide, substituiert oder nicht, und die Mischungen von diesen.

7. Elektrochemischer Lithiumgenerator nach Anspruch 6, **dadurch gekennzeichnet, dass** das Übergangsmetallphosphat ausgewählt ist aus der Gruppe, die gebildet wird durch LiFeₓ₁Mn₁₋ₓ₁PO₄, mit 0≤x₁≤1 und LiCoPO₄ und die Mischungen von diesen.

8. Elektrochemischer Lithiumgenerator nach Anspruch 6, **dadurch gekennzeichnet, dass** das Übergangsmetalloxid ausgewählt ist aus der Gruppe, die gebildet wird durch LiMₓ₂M'ₓ₃Mn₂₋ₓ₂₋ₓ₃O₄ mit 0≤x₂≤0.33, 0≤x₃≤0.5, wobei M Li oder Mg bezeichnet und M' ein Übergangsmetall bezeichnet, ausgewählt aus der Gruppe, die gebildet wird durch Ni, Co, Fe, Cr, durch LiCoₓ₄Ni₁₋ₓ₄O₂ mit 0≤x₄≤1, LiAlₓ₅Ni₁₋ₓ₅O₂ mit 0≤x≤0.25 und Mischungen von diesen.

9. Elektrochemischer Lithiumgenerator nach Anspruch 6, **dadurch gekennzeichnet, dass** das Übergangsmetalloxid Li_{1+ε}Mn₂₋εO₄ mit 0≤ε≤0,33 ist.

10. Elektrochemischer Lithiumgenerator nach einem der Ansprüche 1 bis 5, **dadurch gekennzeichnet, dass** das positive aktive Material der wenigstens einen bipolaren Elektrode ein durch Adsorption aktives Material ist.

11. Elektrochemischer Lithiumgenerator nach Anspruch 10, **dadurch gekennzeichnet, dass** das positive aktive Material ein aktivierter Kohlenstoff ist.

12. Elektrochemischer Lithiumgenerator nach einem der Ansprüche 1 bis 11, **dadurch gekennzeichnet, dass** die Separatoren (15, 19) durch ein poröses, ein Lithiumionen leitendes flüssiges Elektrolyt enthaltendes Element gebildet werden.

13. Elektrochemischer Lithiumgenerator nach einem der Ansprüche 1 bis 11, **dadurch gekennzeichnet, dass** die Separatoren (15, 19) durch ein ein Lithiumsalz enthaltendes polymerisches Elektrolyt gebildet werden.

14. Elektrochemischer Lithiumgenerator nach einem der Ansprüche 1 bis 11, **dadurch gekennzeichnet, dass** die Separatoren (15, 19) durch ein anorganisches, Lithiumionen leitendes Material gebildet werden, ausgewählt aus der durch die Phosphate und die Lithiumborate gebildeten Gruppe.

15. Elektrochemischer Lithiumgenerator nach Anspruch 14, **dadurch gekennzeichnet, dass** das anorganische, Lithiumionen leitende Material Li₃PO_{2,5}N_{0,3} ist.

16. Elektrochemischer Lithiumgenerator nach einem der Ansprüche 1 bis 11, **dadurch gekennzeichnet, dass** die Separatoren (15, 19) ein geschmolzenes Lithiumsalz enthalten.

17. Elektrochemischer Lithiumgenerator nach einem der Ansprüche 1 bis 11, **dadurch gekennzeichnet, dass** die Separatoren (15, 19) durch eine ein gelöstes Lithiumsalz enthaltende ionische Flüssigkeit gebildet werden.

18. Elektrochemischer Lithiumgenerator nach Anspruch 17, **dadurch gekennzeichnet, dass** die ionische Flüssigkeit ausgewählt ist aus der Gruppe, die gebildet wird durch die Imidazoliumsalze, die Dialkylimidazoliumsalze, die Alkylpyridiniumsalze, die Chloraluminatsalze, die Alkylchloraluminatsalze.

19. Elektrochemischer Lithiumgenerator nach einem der vorhergehenden Ansprüche, **dadurch gekennzeichnet, dass** alle elektrisch leitfähigen Substrate (13, 17, 21) aus Aluminium sind, und **dadurch**, dass alle negativen aktiven Materialien des genannten Generators aus demselben Material sind, und alle positiven aktiven Materialien des genannten Generators aus demselben Material sind.
